Europäisches Patentamt

**European Patent Office**

**Office européen des brevets**

(19) ((•))

(11) Publication number: **0 012 037**
**A1**

(12) # EUROPEAN PATENT APPLICATION

(21) Application number: **79302771.5**

(22) Date of filing: **03.12.79**

(51) Int. Cl.³: **F 16 L 59/14**
**F 24 J 3/02, F 24 J 3/00**
**F 23 M 5/00, F 23 C 7/06**

(30) Priority: **05.12.78 IL 56130**
**20.03.79 IL 56910**

(43) Date of publication of application:
**11.06.80 Bulletin 80/12**

(84) Designated Contracting States:
**BE CH DE FR GB IT NL**

(71) Applicant: **Melamed, Avraham**
**31 Haoranim Street**
**Kfar Shemaryahu(IL)**

(71) Applicant: **Wirguin, Joseph Menachem**
**40 King George Street**
**Jerusalem(IL)**

(72) Inventor: **Melamed, Avraham**
**31 Haoranim Street**
**Kfar Shemaryahu(IL)**

(72) Inventor: **Wirguin, Joseph Menachem**
**40 King George Street**
**Jerusalem(IL)**

(74) Representative: **Abrams, Michael John et al,**
**Haseltine Lake & Co. 28, Southampton Buildings**
**Chancery Lane**
**London WC2A 1AT(GB)**

(54) **Method of thermal insulation of a hot medium and installation for carrying out the method.**

(57) Thermal insulation of a hot medium. The hot medium to be insulated is shielded by an enclosure within a porous medium (4,6,7) and a heat-absorbing fluid is flown counter-convectively and counter-conductively thereacross towards the hot medium. Possible applications of the thermal insulation may be to solar ponds, hollow spaces, heat accumulators, pipes and combustion chambers.

Fig.1

EP 0 012 037 A1

TITLE MODIFIED
see front page

— 1 —

Thermal insulation of hot media

The present invention concerns a method and means for thermal insulation of a hot medium. The expression "hot medium" used herein signifies any gaseous or liquid material or a mixture of such materials (containing also, if desired, solid matter) that is to be thermally insulated, the term "hot" being used in the relative only, signifying that the insulated matter has a higher temperature than its surroundings.

Conventionally, for thermal insulation, insulating material is used. For example, a hot medium to be insulated is contained in an impermeable container and the latter is enrobed in a layer of insulating material having a low coefficient of thermal conductivity, a structure by which convective currents therethrough (mostly air currents) are prevented, and being resistant to the temperature to which it is exposed.

The costs of an insulating material meeting all these requirements, may on occasions be high. Moreover, even with the best of insulators, heat transfer across it can only be reduced and is never quite avoided.

As mentioned, in the conventional insulation methods convection across the insulator is practically eliminated and any residual heat transfer occurs mainly by conduction and to a minor extent by radiation. The present invention is based on the realization that if, in complete departure from conventional concepts, the hot medium is juxtaposed to a permeable body and a heat-absorbing fluid is caused to flow through such body towards the hot medium, heat losses from the latter can practically be avoided.

Based on this realization, the invention consists in a method of thermal insulation of a hot medium comprising juxtaposing the hot medium to a permeable body and causing a heat-absorbing fluid to flow counterconvectively and counterconductively across said permeable body towards the hot medium under a pressure higher than that of the hot medium.

In the following the permeable body will be referred to as "passive insulator" and the heat-absorbing fluid flowing therethrough as "active insulator". The active insulator may be in gaseous or liquid form.

In order to ensure the flowing of the active insulator across the passive insulator in the direction of the hot medium, a pressure gradient across the passive insulator must be permanently maintained. The difference between the pressures at both sides of the passive insulator must at all times be sufficient to overcome the flow resistance of the passive insulator, which resistance varies inversely with the permeability of the passive insulator. Such pressure gradient can be established in different ways. For example, where ambient air serves as the active insulator, the hot medium may be put under sub-atmospheric pressure so that air flow across the passive insulator is by suction. Or where water, for example, is used as the active insulator and the passive insulator is in the form of a hollow body holding the hot medium in its inner space, such body may be submerged in a container, a water course or a lake at a depth sufficient to set up the required pressure gradient. In such cases no other means are required in order to ensure the flow of the active insulator across the passive insulator. There may, however, be cases in which pressure inside the hot medium is equal to or exceeds that of the ambient medium, or in which the required pressure gradient exceeds that which is attainable by the above-mentioned expedients for the desired flow of the active insulator across the passive insulator. In such cases the active insulator has to be pressurized and this may be achieved by setting up on the outer side of the passive insulator and adjacent thereto a space outwardly sealed by an impermeable cover or casing and injecting the active insulator under the required pressure into such space. For example, the passive insulator may be contained within an impermeable casing adequately spaced therefrom; or the hot medium may be confined between an impermeable heat source, say the bottom of a solar pond, on the one side, and the passive insulator body on the other side, the latter being in turn sandwiched between the hot medium and an impermeable wall or cover or have its remaining sides not facing the hot medium surrounded by impermeable walls.

The influx of the active insulator into the hot medium occurs by way of an extremely large number of feeble jets, their number depending on the interior structure of the passive insulator. This influx sets up a cushion of active insulator or of a mix of active insulator and hot medium separating the hot medium from the interior face of the passive insulator. This cushion which continuously renews itself, reduces or prevents heat transmission by conductivity from the hot medium to the passive insulator.

The invention also provides an installation for the insulation of a hot medium comprising a passive insulator body, means for containing a hot medium in juxtaposition to the passive insulator body and means for causing an active insulator to flow across the passive insulator body towards the hot medium.

It is thus seen that in the heat insulation method and installation according to the invention, the flow of active insulator from the cool periphery towards the hot part is in opposite direction to the would-be heat flow in the absence of active insulator. In this way heat flow to the periphery by conduction is prevented and the sensible heat of the hot medium remains confined in juxtaposition to the passive insulator.

The influx of the active insulator into the hot medium should preferably not cool the latter. The mass of the active insulator should, therefore, be dosed so as to make it emerge from the passive insulator into the hot medium at a temperature equal to that of the latter, as far as technically feasible. An insufficience of active insulator would result in heat losses of the insulated hot medium, whereas an excess of active insulator, while preventing heat losses, would reduce the mean temperature of the hot medium-active insulator mix. Regulating means are therefore preferably provided to control the volume of active insulator so as to maintain the temperature at the interface of the above-mentioned cushion with the passive insulator at the desired predetermined temperature of the hot medium-active insulator mix.

Different solid bodies may be inserted into the space provided for the hot medium such as, for instance, apparatus, containers, impermeable partitions separating different media, pebbles accumulating thermal energy, means for injecting or withdrawing thermal energy, means for withdrawing a volume of hot medium-active insulator mix corresponding to the influx of the active insulator, means for maintaining a reduced pressure within this space, an oil or gas burner, measuring and control devices, etc.

Where a container is or several containers are placed within the hot medium space, such containers may hold any desired gaseous liquid or solid matter which in this way is kept at a desired temperature. Such a container may, if desired, be conventionally insulated by suitable insulating material.

The hot medium may also be a chemical reaction mixture contained within a porous vessel serving as passive insulator and in which the chemical reaction takes place. In this case the active insulator may be one of the reactants or else a fluid inert to all components of the mixture.

Where the hot medium is confined between an impermeable heat source and a passive insulator body the hot medium takes up heat emanating from the heat source by conduction and radiation and thereby prevents heat dissipation. Examples of such heat sources are a burner or a combustion chamber, the bottom and side walls or a solar pond, the walls of an incubator chamber, the walls of a hothouse.

Further examples of hot media that can be insulated with advantage in accordance with the invention are so-called thermal ponds or solar ponds which contain aqueous solutions adapted for the storage of heat derived from the sun or any other heat donor source; sweet water lakes serving for the storage of surplus heat from industry or power stations; solid solar collector bodies placed on the ground and fitted with heat exchangers with a gaseous or liquid heat acceptor fluid; pebble beds for domestic and industrial use; etc.

Taking for example the specific case of thermal or solar ponds, the common feature to all such ponds is that a hot aqueous medium is in contact with the ground. In order to prevent the sinking of hot solution into the ground which if it were to happen would entail serious heat losses, it is customary to seal a thermal pond from below with impervious material and the sealing material used for the purpose has to be resistant to heat and the corrosivity of the hot brine with which it is in contact. Such materials are, as a rule, quite expensive and the costs increase with the temperature of the brine to which it is exposed.

Such sealing does, however, not prevent heat losses due to the heat conductivity of the sealing material and the underlying soil. Such losses are particularly significant at the beginning of the operation and they may be attenuated with time as the soil below the pond heats up. However, if the ground water level underneath the pond is relatively high and in particular when the water is flowing, this water will serve as a constant heat sink for the heat conducted away from the bottom of the pond, and the above attenuation will not occur.

Furthermore, subterranean soil is, as a rule, humid and includes entrapped air. The heat conducted away from the bottom of a thermal pond may bring about a strong evaporation or even boiling of the soil humidity and at the same time also heat up the entrapped air. This gives rise to uncontrollable currents of water vapour and air which produces undesired side effects impairing the normal operation of the pond. This problem has hitherto not been solved.

In accordance with the invention the problem is solved by arranging the soil underneath and around the pond to serve as passive insulator and injecting therein an active insulator so as to cause it to flow towards the pond.

Yet another example of a hot medium in connection with which the invention can be used to great advantage is a pebble bed. Pebble beds are widely used for heat storage where the heat supply and requirements do not coincide. It is, however, well known that heat losses from a pebble bed to the ground are substantial. In accordance with the invention these losses are totally or substantially avoided by injecting an active insulator , e.g. air, into the soil underneath and around the pebble bed. For example, pebble beds are used to store heat from solar collectors capable of capturing solar radiation and converting it into heat, in that during day time when the amount of solar heat captured exceeds demand, the excessive heat is stored in a pebble bed. For this purpose air is made to circulate between the solar collector and the pebble bed and the so-circulating air receives heat from the solar collector and gives it off to the pebble bed. In accordance with the invention some of the air passing through the pebble bed may, after having given off its heat be tapped off for injection into the soil underneath the pebble bed. Alternatively one may also use fresh air for this purpose.

All the foregoing are examples of the very many possible applications of the present invention. In fact, the invention provides a new concept of thermal insulation which can be used to advantage wherever conventional insulation has hitherto been used and where it is desired to improve on such insulation and prevent practically completely any heat losses.

This new concept, which may be termed dynamic insulation, is based on interaction between a hot medium, a passive insulator and an active insulator which may be summed up briefly as follows:

(a)   Heat losses of the hot medium caused by the thermal conductivity of the passive insulator are absorbed by direct heat transfer from the passive to the active insulator and are recycled to the controlled medium;

(b) Convective losses due to convective currents through the porosities and cavities of the passive insulator tending to flow away from the hot medium towards the cold periphery of the passive insulator are cancelled out by the counter-convective flow of the active insulator through the passive insulator;

(c) Radiation losses of the outer layer of the passive insulator to the space surrounding this insulator will be captured for all practical purposes by the active insulator. Where the active insulator is surrounded by an impermeable casing, radiation losses may be further reduced by making the inner surface of such casing radiation reflective.

There will also be instances in which the active insulator itself is radiation absorbing, particularly in the infra-red range at which a heated passive insulator will radiate.

Penetration of the active insulator in the hot medium increases the mass of the latter and in consequence the temperature of the hot medium is slightly reduced. However, for all practical purposes, thermal energy losses from the hot medium are practically prevented.

The designer of an installation according to the invention has a number of parameters at his disposal:

i. The coefficient of thermal conductivity of the passive insulator material. The lower this coefficient, the lesser is the energy absorbed by the passive insulator and the less energy has to be absorbed by the active insulator.

ii. The permeability of the passive insulator to the passage therethrough of the active insulator.

iii.    The thickness of the passive insulator body.

iv.    The difference between the injection pressure of the active insulator and the pressure of the hot medium, which difference determines the rate of flow through the passive insulator.

v.    The nature of the active insulator.

vi.    In certain cases the initial temperature of the active insulator.  For example, where waste heat of low-grade energy sources are·available, pre-heating of the active insulator to above ambient temperature may be desirable.

In making his choices, the designer must take into consideration that the melting point of the passive insulator must be substantially higher than the temperature of the hot medium, that the passive insulator must not decompose at this temperature, that the passive and active insulators must not chemically react with one another and that the active insulator must be either identical with the hot medium or with an ingredient thereof or tolerable by the hot medium.

In the insulation method according to the present invention the active insulator is constantly added to the hot medium.  As a rule, the space available for the hot medium within the passive insulator is limited and it will thus as a rule be required to withdraw the excessive active insulator from the hot medium continuously or intermittently.

If desired, it is possible in accordance with the invention to insulate conventionally any casing or cover of the space into which the active insulator is injected.  Such insulation serves as an additional precautionary measure and may be useful in cases where the active insulator is injected at an above ambient temperature.

The invention is illustrated, by way of example only, in the accompanying drawings in which:

Fig. 1 is a diagrammatic cross-section through a solar pond designed for insulation in accordance with the invention;

Fig. 2 is a diagrammatic cross-section through a high-pressure steam conduit designed in accordance with the invention;

Fig. 3 is a fragmentary diagrammatic cross-section through a first embodiment of a heat accumulator designed in accordance with the invention;

Fig. 4 is a diagrammatic cross-section through a second embodiment of a heat accumulator designed in accordance with the invention;

Fig. 5 is a cross-section through yet another embodiment of a heat accumulator designed in accordance with the invention;

Fig. 6 is a diagrammatic cross-section through a combustion chamber insulated in accordance with the invention;

and

Fig. 7 is a diagrammatic cross-section through yet another embodiment of the invention.

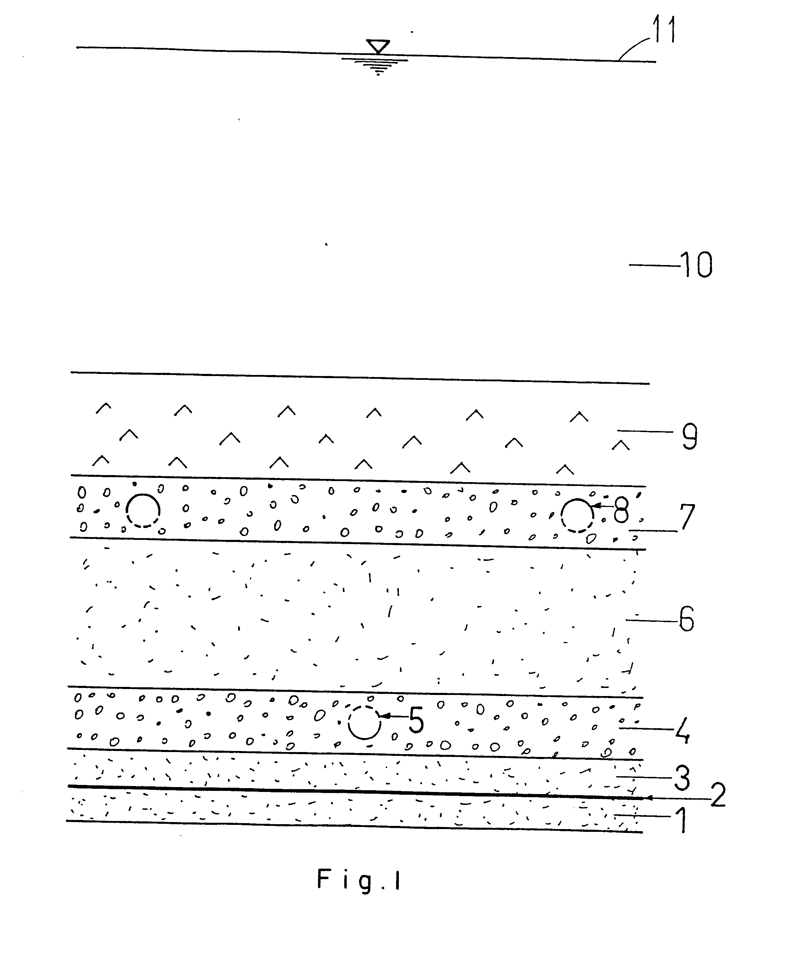

The pond according to the invention shown in Fig. 1 comprises an impervious sheet 2 sandwiched for mechanical protection between two sand layers 1 and 3. Overlying the sand layer 3 is a gravel layer 4 in which there are placed several perforated injector pipes 5 (only one of which is shown) spaced from each other according to requirements. All of pipes 5 are connected to a distributor manifold (not shown) connected in turn to the delivery end of a pump (equally not shown). Overlying the gravel layer 4 is another sand layer 6 which in turn is overlayed by a further gravel layer 7 comprising placed therein several perforated collector pipes 8 (only two of which are shown) spaced from each other according to requirements. Pipes 8 are connected to a collector manifold (not shown). Overlying layer 7 is an impervious sealing layer 9 which forms the bottom of a solar pond generally indicated at 10 containing a body of aqueous solution whose surface is indicated at 11.

The permeability of the sand layer 6 is lower by about two to three orders of magnitude than that of the gravel layers 4 and 7 between which it is sandwiched. Layers 4, 6 and 7 form together a passive insulator body.

During operation an active insulator fluid is injected into gravel layer 4 through the injector pipes 5 and distributes evenly therein. The delivery pump continues to operate at a constant, controlled rate and, in consequence, the fluid ascends from layer 5 through layer 6 into layer 7 where it is again distributed evenly and penetrates into the collector pipes 8 from where it is withdrawn through a collector manifold and piping system (not shown).

The rate at which the active insulator fluid is injected is so controlled that it ascends at such a velocity that practically all the heat conducted into the ground from pond 10 through the bottom 9 is taken up by the ascending fluid. A practical flow velocity in this case may be 1cm/day. Any residual amounts of heat that may possibly reach the impervious sheet 2 are relatively small so that the sheet is subjected only to relatively low temperatures. This means that the sheet 2 has to be of relatively low heat resistance with the consequence that a relatively cheap material may be used.

If desired, the active insulator fluid used in accordance with the above embodiment of the invention can be the same brine that is present in the solar pond 10. This has the advantage that the warm solution arriving at layer 7 and collected by collector pipes 8 may be charged into the pond 10. Where in such a case pond 10 requires make-up the warm solution arriving from pipes 8 may be used therefor. Where no or only little make-up is required, it is possible to operate in a closed cycle by withdrawing relatively cool solution from an upper level of the pond, using the so-withdrawn solution as fluid for injection into layer 4 and recycling the warm solution collected by pipes 8 into the pond.

Alternatively, the warm fluid collected by collector pipe 8 may be subjected to heat exchange outside the pond and the so-recovered heat may be used in any suitable manner, e.g. for domestic heating.

By a modification of the thermal pond of Fig. 1, layer 6 forms the bottom of the pond and the impermeable bottom layer 9 of the pond as well as the underlying gravel layer 7 and collector pipes 8 are disposed with. In such a case the warm brine ascending through layer 6 in accordance with the invention penetrates directly into the thermal pond.

Where the fluid injected through pipes 5 is readily available at the site of the pond, it is possible to do away with the impervious sheet 2 and the sand layers 1 and 3 in which it is embedded. In such a case some of the fluid injected through injector pipes 5 percolates into the soil while the balance ascends as required in accordance with the invention. The rate of injection will have to be so controlled as to take account of such percolation losses.

The layers 1, 2 and 3 may also be disposed with in cases in which the ground is naturally impervious, e.g. of rock, clay or marl.

It has been found that in thermal ponds according to the invention heat losses to the ground may be completely avoided or significantly reduced. Furthermore, the boiling of water present in the subterranean soil due to natural humidity as well as the uncontrolled movement of hot air and resulting heat losses by convection are

0012037

avoided.

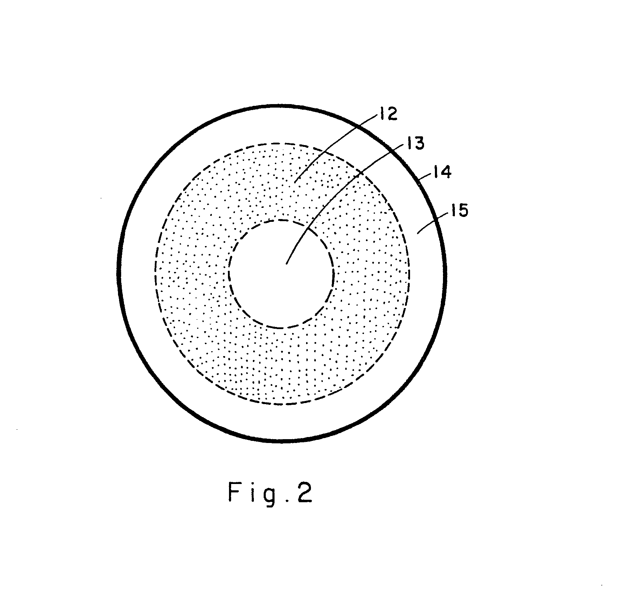

The high-pressure steam conduit according to the invention shown in Fig. 2 comprises a pipe 12 made out of porous fire clay and having an interior space 13. Pipe 12 is surrounded by a steel casing 14 spaced therefrom so as to provide between the casing and the pipe a free space 15. In operation, pipe 12 serves for conducting steam under elevated pressure and temperature, say, 100 atm and 450°C., and also fulfils the function of passive insulator. Boiler feed water of ambient temperature or a turbine condensate being the active insulator is fed into space 15 also at elevated pressure which is slightly higher than the one prevailing inside space 13, say, 101 atm. Due to the difference between the pressure prevailing in space 15 and space 13 the feed water flowing through the former is forced through the wall of pipe 12 towards the latter and on its passage through the porous pipe the water is heated by the heat losses of the steam to the porous pipe 12. ·There prevails a temperature gradient across pipe 12 from the inner face thereof where the temperature is near to that of the through-flowing steam, say, about 440°C., to ambient temperature at the outer face. At a certain depth inside pipe 12 the water which acts as active insulator attains the temperature of about 310°C. which is the boiling point at an intermediate pressure between 100 and 101 atm., and from thereon the active insulator turns at first into saturated and thereafter into superheated steam which is driven towards the inner space 13 of pipe 12. The rate of flow of the active insulator across pipe 12 is so regulated that when the steam enters space 13 it has attained a temperature of about 440°C. It is thus seen that the active insulator flowing from space 15 to space 13 sweeps back, as it were, all the heat emanating from within space 13 and in this way there are practically no heat losses to the atmosphere by convection, conduction or radiation.

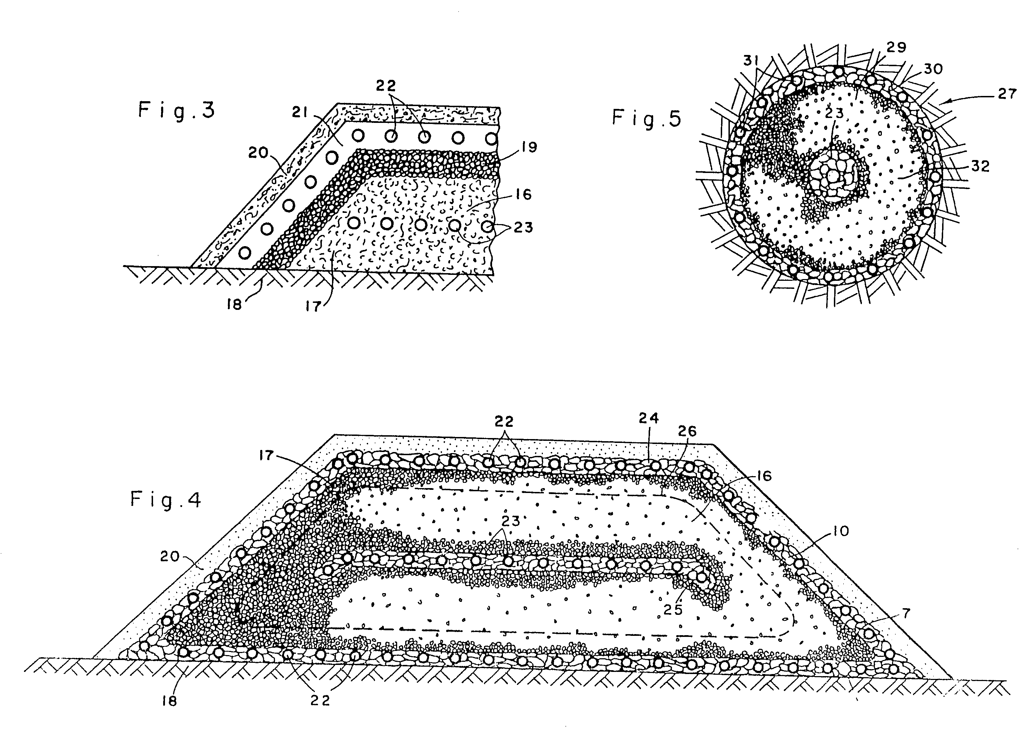

Fig. 3 shows an accumulator of thermal energy insulated in accordance with the present invention. The accumulator has the shape of a truncated cone. A space 16 is provided inside the accumulator containing the hot medium, for instance, hot air. This space 16 is filled with a heat accumulating solid body 17 of as high a specific heat and as high a specific gravity as available and economically justified in order to maximize the accumulative capacity per unit of accumulator volume. For example, pebbles, fire clay scrap and the like are adequate. Inside space 16 the solid body 17 forms a truncated cone shape heap sloping outwardly at the natural angle of repose and resting on the ground 18. This space 16 with its heap of accumulating solid body 17 is surrounded by the permeable passive insulator 19 constituted by a layer of solids having a low coefficient of heat conductivity, for instance, coal slag or granulated blast furnace slag. The passive insulator is flat at its top and slopes conically at the natural angle of repose of the material used. This structure is completely enclosed by an impermeable sheath 20, except where it rests on the ground 18, a space 21 being provided between this sheath and the passive insulator 19. An array of perforated pipes 22 is provided inside space 19 and an analogous array 23 is located centrally inside the core of the accumulating body 17. Each of the pipe arrays 22 and 23 is individually connected to a manifold (not shown).

For heat input into the accumulator a heat carrier fluid, for instance, hot air, is injected through the perforated pipe system 23 via the manifold (serving during heat accumulation as distributor) at a pressure sufficient to make it fill space 16 and permeates in all directions through the bed of heat accumulating body 17 as well as through the passive insulator 19. On its way the heat carrier transfers its sensible heat to the heat accumulating body 17, a hot isothermal core being formed within the accumulator which gradually expands and the spent heat carrier fluid reaches space 21 at a predetermined temperature. It is collected and evacuated therefrom by means of the pipe system 22 and its manifold acting then as collector. The accumulator is charged to capacity when the hot medium inside space 16 and the solid body 17 contained therein have reached, as far as technically feasible, a desired uniform target temperature up to the interface between space 16 and the passive insulator 19. This passive insulator 19 is so dimensioned that when during accumulator charging the target temperature has reached the said interface, the temperature at the interface of the passive insulator with the surrounding space 21 is at a predetermined lower level, for instance, that of the ambient atmosphere or of the ambient matter surrounding sheath 20.

When the heat charge is completed, heat losses are prevented in accordance with the invention by charging an active insulator fluid, preferably identical with the heat carrier, into the pipe system 22, the manifold to which they are connected now serving as distributor. The active insulator emerging from pipes 22 penetrates through the passive insulator 19 into the hot medium in space 16 and is taken up by the pipe system 23. Heat losses of the hot medium contained in space 16 and of the heat accumulating body 17 to the passive insulator 19 are captured by the active insulator fluid and hot, active heat insulator fluid is withdrawn through pipes 23 and the associated manifold which now acts as collector. The rate of flow of the active insulator from space 21 to pipe system 23 is regulated so as to maintain a predetermined temperature in space 21.

The active insulator also serves as heat carrier for heat withdrawal. As long as only insulation is required, the flow of the active insulator through the accumulator will be at a slow rate. When heat is to be extracted, the rate of flow is increased according to requirements and the heat of the discharged heat carrier-active insulator fluid, is utilized in any suitable way.

In many instances the availability of heat for storage purposes will be subject to fluctuations, and the charging of the accumulator to maximum capacity may occur only exceptionally. Therefore, most of the time the isothermal core of the accumulator will be of reduced volume, and from its border outwardly the temperature gradually decreases towards the passive insulator 19. It may thus be economically justified to transfer the functions of the passive insulator to the nonisothermal zone of the heat accumulating elements contained in space 16, reducing thereby the volume of the accumulator, even at the cost of providing a less efficient heat insulation during the rare periods of peak load on the accumulator.

It will thus simplify the design if the interior of the plurality of perforated pipes 22 assumes the pressure chamber function of space 21. This alternative is illustrated in Fig. 4 where similar components are designated by the same numerals as in Fig. 3. In accordance with this alternative, the gaps between the individual pipes 22 are filled with large pebbles 24 so as to achieve a more uniform distribution of the fluid emerging from said perforated pipes 22. Similarly, large pebbles 25 surround the system of pipes 23. Broken line 26 indicates the fluctuating border between the isothermal zone being the hot medium and the non-isothermal zone acting as passive insulator.

It follows from the above that in the embodiments of the invention according to Figs. 3 and 4 even during a storage period some heat is withdrawn at a trickle rate by the hot active insulator emerging from pipes 23 and this heat can also be utilized.

Heat storage in the accumulator according to Figs. 3 and 4 may be for short or long duration. For example, heat stored during day time may be withdrawn at night or heat stored in summer may be withdrawn in winter.

The heat accumulator 27 of Fig. 5 is essentially similar to that of Figs. 2 and 3. In this case the cross-section is circular and the entire accumulator is buried in the ground so that an outer sheath corresponding to sheath 20 of Figs. 3 and 4 is not required provided the nature of the ground is such as to be capable of acting as a practically impermeable casing. Thus, this accumulator comprises a central layer 28 of large-size pebbles, a main body 29 of medium-size pebbles and an outer layer 30 of large-size pebbles comprising an array of pipes 31 connected to a manifold (not shown) and the central layer 28 has formed therein a coaxial tubular space 32.

The operation of the heat accumulator of Fig. 5 is similar to those of Figs. 3 and 4 and need therefore not be described.

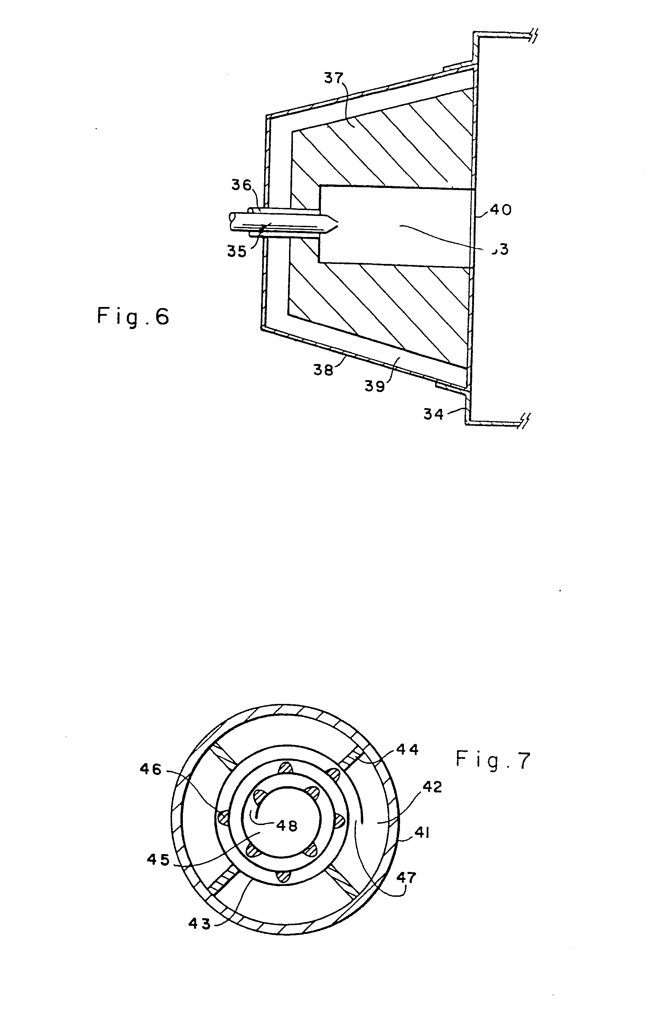

Fig. 6 illustrates a combustion chamber 33 of an oil burner mounted on a heat-consuming appliance 34, said combustion chamber being dynamically insulated in accordance with the present invention. Atomized liquid fuel is injected into the combustion chamber by means of a conventional nozzle 35. Primary combustion air is supplied by conventional means through a channel 36 coaxial with the nozzle 35. The combustion chamber 33 is the interior cylindrical space of a conical air permeable passive insulator body 37. This body 37 is encased in a conical jacket 38. The space 39 between the jacket 38 and the passive insulator body 37 is filled with air under adequate pressure serving as active insulator and at the same time as secondary combustion air. It is seen from Fig. 6 that the thickness of the wall of the passive insulator body 37 increases linearly towards the outlet 40 of the combustion chamber 33. The flow resistance against the penetration of the active insulator therethrough will also increase, probably exponentially. Consequently, more preheated active insulator will be fed as secondary combustion air into the combustion chamber 33 near the outlet of nozzle 35, where it is most needed, than in the vicinity of the combustion chamber outlet 40. At this extremity of the combustion chamber 33 the volume of active insulator fed into the hot medium (combustion gases) will be dictated by considerations of heat insulation, while the feed of active insulator near the outlet of nozzle 24 will depend also on the requirements of secondary combustion air. Obviously, the profile of the passive insulator body need not be conical. By varying the three parameters - thickness of wall (i.e. profile) of the passive insulator body, its permeability and the pressure prevailing in space 28 - both requirements, viz. dynamic insulation and optimal conditions of chemical reaction, can be met.

Fig. 7 shows yet another embodiment of the invention. In this embodiment a tubular casing 41 surrounds a space 42 containing the pressurized active insulator fluid. A spirally wound tubular coil 43 is held within casing 41 by means of radial ribs or bars 44. Coil 43 is made out of a thin metal foil, for instance an aluminium foil 0.1 mm thick, and leads to an inner space 45 which serves for holding a hot medium. On the foil that forms coil 43 there are provided spacing protrusions in form of longitudinal ribs 46 maintaining between adjacent layers of the coil constricted passages of, say, 0.2 mm clearance. The active insulator flows tangentially through slot 47 into the spiral maze of the coil 43 and leaves it through the delivery slot 48. The reflective properties of the coil-forming metal foil prevent radiation losses while the active insulator prevents conductivity and convection losses. The coil 43 thus serves as passive insulator.

If desired, the passive insulator may consist of a double, triple or multiple coil, in which embodiment there are two or three or a plurality of inlets 47 into the maze of the coil 43 and the identical number of outlets therefrom into space 45.

The influx of the active insulator into the space 45 containing the hot medium is tangential whereby a spinning motion is imparted to the active insulator. Thus a layer separating the hot medium from a direct contact with the passive insulator is set up.

CLAIMS

1.        A method of thermal insulation of a hot medium comprising juxtaposing the hot medium to a permeable body (passive insulator) and causing a heat-absorbing fluid (active insulator) to flow counterconvectively and counterconductively across said permeable body towards said hot medium under a pressure higher than that of the hot medium.

2.        A method according to Claim 1, wherein an active insulator fluid is injected into soil that is in heat conductive contact with a thermal pond which soil serves as passive insulator, such as to flow towards said pond.

3.        A method according to Claim 2, wherein the soil is sealed beyond the layer at which the active insulator is injected thereby to prevent escape of the latter.

4.    .    A method according to Claim 2 or 3, wherein collector means are provided for collecting heated active insulator fluid.

5.        A method according to any one of Claims 2 to 4, wherein said active insulator fluid is an aqueous brine and after completing its passage through the soil it is charged into the pond.

6.        A method according to Claim 5, wherein the bottom and walls of the pond are permeable and the heated brine serving as active insulator flows directly into the pond.

7.        A method according to Claims 2 and 5, wherein the pond is liquid impermeable and hot brine is flown into the pond from said collector means.

8.       A method according to Claim 1, wherein the passive insulator is associated with an impermeable wall to prevent flow of the active insulator away from the passive insulator.

9.       A method according to Claim 8, wherein said wall encases the passive insulator.

10.      A method according to Claim 8 or 9, wherein a space is provided between the outer wall, and the passive insulator, and active insulator is fed into such space.

11.      A method according to any one of Claims 8 to 10, wherein said impermeable wall is conventionally insulated.

12.      A method according to any one of Claims 1 and 8 to 11, wherein the hot medium is confined between a heat source and a passive insulator body.

13.      A method according to any one of Claims 1 and 8 to 11, wherein the hot medium is located in a hollow space within the passive insulator.

14.      A method according to any one of the preceding Claims wherein at least one solid body is placed within the hot medium.

15.      A method according to Claim 14, wherein said body is an impermeable container which, if desired, may be conventionally insulated.

16.      An installation for carrying out the method according to Claim 1 comprising a passive insulator body (as herein defined), means for confining a hot medium in juxtaposition to the passive insulator body and means for causing an active insulator (as herein defined) to flow across the passive insulator body towards the hot medium.

17. An installation according to Claim 16 being a thermal pond provided with means for the injection of an active insulator fluid into the soil around the pond and at a distance therefrom and for inducing a controlled flow of said fluid towards the pond.

18. An installation according to Claim 17 wherein the bottom and side walls or the pond are permeable and said means for injection of active insulator fluid are designed to cause said fluid to penetrate the pond.

19. An installation according to Claim 16 being a pebble bed provided with means for the injection of an active insulator fluid into the soil around the pond and at a distance therefrom and for inducing a controlled flow of said fluid towards the pond.

20. An installation according to Claim 16 adapted for placing at least one solid body in contact with the hot medium.

21. An installation according to Claim 20, wherein said body is an impermeable container which, if desired, may be conventionally insulated.

22. An installation according to any one of Claims 16, 20 and 21, wherein the passive insulator comprises a hollow space for containing the hot medium.

23. An installation according to any one of Claims 16 and 20 to 22, wherein an impermeable wall is associated with the passive insulator body adapted to prevent flow of the active insulator away from the passive insulator.

24. An installation according to Claim 23, wherein said wall encases the passive insulator body.

25.     An installation according to Claim 23 or 24, wherein a space is formed between said wall and passive insulator body, means being provided for feeding active insulator into said space.

26.     An installation according to Claims 16 and 23 being a porous pipe surrounded by an impermeable casing which pipe is adapted to conduct a hot fluid.

27.     An installation according to Claims 16, 20 and 23 being a heat accumulator the hot medium of which contains a mass of heat accumulating bodies.

28.     An installation according to Claim 27, wherein the external part of the mass of heat-absorbing bodies serves as passive insulator.

29.     An installation according to Claims 16 and 23 being a combustion chamber contained within a porous casing.

30.     An installation according to Claims 16 and 23 comprising a tubular casing, a spiral tubular coil with spacing protrusions serving as passive insulator body and an inner space within said coil for holding the hot medium, the said spiral tubular coil being a single, double or multiple coil.

MC:us

11

—10

9

8 —— 7

6

5

4

3
2
1

Fig.1

Fig.2

Fig.3

Fig.5

Fig.4

0012037

Fig.6

Fig.7

## DOCUMENTS CONSIDERED TO BE RELEVANT

| Category | Citation of document with indication, where appropriate, of relevant passages | Relevant to claim |
|---|---|---|
| X | <u>US - A - 2 215 532</u> (RICHARDSON)<br>* Page 1, left-hand column, lines 1-55; page 1, right-hand column, lines 1-5; page 2, left-hand column, lines 43-75; page 3, left-hand column, line 75; page 3, right-hand column, lines 1-19; figures 4-7 *<br><br>-- | 1,8,9, 10,12, 13,16, 22,23, 24,25, 26 |
| A | <u>JP - B - 53 18729</u> (BRIGISTON)<br>* In its entirety *<br><br>---- | 1 |

**CLASSIFICATION OF THE APPLICATION (Int Cl. )**

F 16 L 59/14
F 24 J 3/02
       3/00
F 23 M 5/00
F 23 C 7/06

**TECHNICAL FIELDS SEARCHED (Int.Cl. )**

F 22 B
F 24 J
F 17 C
F 16 L

**CATEGORY OF CITED DOCUMENTS**

X. particularly relevant
A. technological background
O: non-written disclosure
P. intermediate document
T: theory or principle underlying the invention
E: conflicting application
D: document cited in the application
L: citation for other reasons

&. member of the same patent family, corresponding document

The present search report has been drawn up for all claims

| Place of search | Date of completion of the search | Examiner |
|---|---|---|
| The Hague | 05-03-1980 | CRAB |

EPO Form 1503.1 06.78